(19) Europäisches Patentamt
European Patent Office
Office européen des brevets

(11) Veröffentlichungsnummer: **0 009 122 B1**

# (12) EUROPÄISCHE PATENTSCHRIFT

(45) Veröffentlichungstag der Patentschrift: **30.12.81**

(51) Int. Cl.³: **C 09 D 3/64,** C 08 L 67/00

(21) Anmeldenummer: **79103003.4**

(22) Anmeldetag: **17.08.79**

## (54) Wässrige Polyesterdispersionen, Verfahren zu deren Herstellung und ihre Verwendung in Einbrennlacken.

(30) Priorität: **29.08.78 DE 2837552**

(43) Veröffentlichungstag der Anmeldung: **02.04.80 Patentblatt 80/7**

(45) Bekanntmachung des Hinweises auf die Patenterteilung: **30.12.81 Patentblatt 81/52**

(84) Benannte Vertragsstaaten: **AT BE CH DE FR GB IT NL SE**

(56) Entgegenhaltungen:
**FR-A-2 293 480**
**FR-A-2 328 729**

(73) Patentinhaber: **BAYER AG, Zentralbereich Patente, Marken und Lizenzen, D-5090 Leverkusen 1, Bayerwerk (DE)**

(72) Erfinder: **Zabrocki, Karl, Dr., Edelfalter 33, D-4046 Buettgen (DE)**
Erfinder: **Dhein, Rolf, Dr., Deswatinesstrasse 30, D-4150 Krefeld-Bockum (DE)**
Erfinder: **Weider, Franz, Dr., Jakob-Fröhlen-Strasse 36, D-5090 Leverkusen 3 (DE)**
Erfinder: **Höhne, Klaus, Dr., Elisabeth-Langgaesser-Strasse 39, D-5090 Leverkusen (DE)**
Erfinder: **Schorn, Kurt, Wilhelmsgasse 1, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 009 122 B1

ACTORUM AG.

# Wässrige Polyesterdispersionen, Verfahren zu deren Herstellung und ihre Verwendung in Einbrennlacken

Die vorliegende Erfindung betrifft wässrige Dispersionen auf Basis von Alkydharzen bzw. ölfreien Polyestern und ihre Verwendung für die Herstellung von Einbrennlacken.

Unter «wässrigen Dispersionen» werden im folgenden heterogene Systeme verstanden, die undurchsichtig sind und bei denen die organische Harzphase als Teilchen einer mittleren Grösse von 50–3000 nm in Wasser verteilt ist. Unter den Begriff «wässrige Dispersionen» fallen im folgenden also nicht jene Alkydharz- bzw. Polyester-Lösungen, die durch neutralisierte Säuregruppen in wässriger Phase durchsichtige Lösungen bilden; derartige Harze besitzen in der Regel Säurezahlen $> 40$, werden in mit Wasser mischbaren organischen Lösungsmitteln vorgelöst und nach der Neutralisation mit Wasser zu homogenen, durchsichtigen Lösungen verdünnt.

Für den zunehmenden Einsatz wässriger Alkydharz- bzw. Polyesterdisperionen sprechen hauptsächlich zwei Gründe: Erstens besitzen sie den Vorteil, dass man auf die Verwendung organischer Lösungsmittel verzichten kann, und zweitens neigen sie – anders als die aus organischer Lösung applizierten Überzugsmittel – kaum zum Ablaufen an senkrechten Flächen vgl. (F. Armitage, L.G. Trace, J. Oil and Colour Chemists Assoc. 1957, S. 860).

Lacke auf Basis wässriger Alkylharz- bzw. ölfreier Polyesterdispersionen sollen lagerstabil sein und zu wasserfesten Überzügen führen, die auch bei höherer Pigmentierung hohen Glanz aufweisen. Eine ideale Kombination dieser Eigenschaften ist bislang unbekannt, so zeigen Überzüge aus Dispersionen gemäss DE-OS 25 54 330 und DE-OS 26 40 127 beispielsweise nicht ausreichenden Glanz.

Die FR-A 2 328 729 betrifft in Wasser «dispergierbare» Polyester, die Säurereste gemäss Komponente a) unseres Hauptanspruchs enthalten können. An anderer Stelle wird gesagt, dass die Säurezahlen dieser Polyester 25–90 betragen können. Ein Polyester mit einer Säurezahl von 25, der auch Säurereste a) enthält, wird an keiner Stelle der entgegengehaltenen Literaturstelle offenbart. Die Polyester der FR-A 2 328 729 werden in einem organischen Lösungsmittel, vorzugsweise Butoxipropanol gelöst, anschliessend neutralisiert und mit Wasser verdünnt (vgl. Seite 6, Z. 25 ff). Zu keinem Zeitpunkt des Herstellungsverfahrens gemäss FR-A 2 328 729 existiert also eine lösungsmittelfreie wässrige Dispersion.

Überraschenderweise wurde nun gefunden, dass nur dann Überzugsmittel mit der gewünschten Kombination guter Eigenschaften zugänglich werden, wenn man für die Herstellung der wässrigen Dispersionen Alkydharze bzw. ölfreie Polyester mit betimmter Säurezahl und ausgewählter Säurekomponente verwendet und zusammen mit einem bestimmten Emulgator einsetzt; ausgehend von diesen Dispersionen führt die Abmischung mit wasserlöslichen Aminoplasten zu ausgezeichneten Einbrennlacken.

Gegenstand der vorliegenden Erfindung sind wässrige Dispersionen aus

A) 25–60 Gew.-% mindestens eines dispergierten Alkydharzes bzw. ölfreien Polyesters mit einem mittleren Molekulargewicht $M_n$ zwischen 800 und 6000,

B) 3–15 Gew.-% mindestens eines Emulgators und

C) 25–62 Gew.-% wässriger Phase,

jeweils bezogen auf die Summe der Komponenten A, B und C,

dadurch gekennzeichnet, dass die Dispersionen frei von organischen Lösungsmitteln sind,

die mittlere Teilchengrösse der Harzphase 50 bis 3000 nm beträgt, das Alkydharz bzw. der ölfreie Polyester A eine Säurezahl von 3–25 besitzt und die Säurekomponente des Alkydharzes bzw. des ölfreien Polyesters A zu

a) 10–100 Mol-% aus einkondensierten Resten mehrbasischer Carbonsäuren mit 4–30 C-Atomen, bei denen die Carboxylgruppen an sekundären und/oder tertiären C-Atomen hängen, die nicht Teil eines aromatischen Systems sind und mit anderen C-Atomen nicht über eine Mehrfachbindung verknüpft sind,

b) 0–90 Mol-% aus einkondensierten Resten anderer aliphatischer und/oder aromatischer mehrbasischer Carbonsäuren mit 4–12 C-Atomen und

c) 0–60 Gew.-% aus einkondensierten Resten aliphatischer, cycloaliphatischer und/oder aromatischer Monocarbonsäuren mit 6–35 C-Atomen besteht, wobei die Molprozente jeweils auf die Summe der Komponenten a und b und die Gewichtsprozente c auf das Alkydharz bzw. den Polyester A bezogen sind,

und der Emulgator B einen Polyester enthält, welcher direkt über Esterbindungen oder über ein Zwischenstück mit einer oder mehreren Polyalkylenoxidketten mit 2–4 C-Atomen in Alkylenoxidrest gekoppelt ist, wobei sich dieses Zwischenstück von einem Melaminharz oder Polyisocyanatbaustein oder Silicon ableitet.

Ein weiterer Gegenstand der Erfindung ist ein Verfahren zur Herstellung dieser Dispersionen, wonach man das Alkydharz bzw. den ölfreien Polyester A in der Schmelze bei Temperaturen von 80–120 °C mit dem Emulgator B homogenisiert und in diese Schmelze das Wasser bzw. (falls das Wasser noch Zuschläge enthält) die wässrige Phase C oder umgekehrt die Schmelze in das Wasser bzw. die wässrige Phase C einrührt.

Ein weiterer Gegenstand der Erfindung ist die Verwendung der erfindungsgemässen Dispersionen in Kombination mit wasserlöslichen Aminoplasten als Einbrennlacke.

Die erfindungsgemässen Dispersionen vereinen in sich ausgezeichnete Stabilität mit hervorragenden lacktechnischen Eigenschaften.

Im folgenden werden unter «Polyestern» fettsäure- und ölfreie Polyester, unter «Alkydharzen»

fettsäure- oder ölmodifizierte Polyester verstanden.

Unter Alkydharzen und Polyestern versteht man durch Polykondensation nach bekannten Verfahren aus Alkoholen und Carbonsäuren hergestellten Polykondensate der Art, wie sie z. B. in Römpps's Chemielexikon, Bd. 1, S. 202, Frankh'sche Verlagsbuchhandlung, Stuttgart, 1966, definiert oder bei D. H. Solomon, The Chemistry of Organic Filmformers, S. 75-101, John Wiley & Sons Inc., New York, 1967, beschrieben sind.

Unter «mehrwertigen Carbonsäuren» werden nachfolgend Di-, Tri- und Tetracarbonsäuren verstanden.

Für die Herstellung der Alkydharze bzw. Polyester A bevorzugte mehrbasische Carbonsäuren a) sind solche, deren Carboxylgruppen unmittelbar an cycloaliphatischen oder cycloolefinischen Ringen stehen; hierbai sind Dicarbonsäuren besonders bevorzugt. Bevorzugte cyclische mehrwertige Carbonsäuren sind Cyclobutandicarbonsäuren, Cyclopentandicarbonsäuren, Cyclopentendicarbonsäure, Cyclohexendicarbonsäure, Cyclopentantricarbonsäuren, Cyclohexandicarbonsäuren, Cyclohexantricarbonsäuren, Cycloheptandicarbonsäuren, Cycloheptantricarbonsäuren, Norbornandicarbonsäuren, Norbornendicarbonsäure, Endoäthylencyclohexandicarbonsäuren.

Als Ringgerüste können selbstverständlich miteinander kondensierte, durch Einfachbindung, zweiwertige Reste oder in Spiroform verbundene Ringe sowie Polycyclen eingesetzt werden. Bevorzugte mehrwertige Carbonsäuren dieser Art sind Verbindungen der Formel

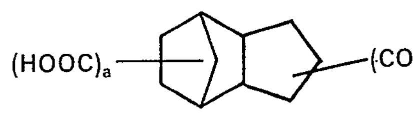 I

worin a und b ganze Zahlen sind und die Summe von a und b eine Zahl von 2 bis 4 bedeuten soll; Verbindungen der Formel

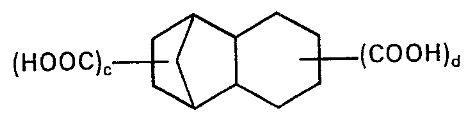 II

worin c und d ganze Zahlen sind und die Summe von c und d eine Zahl von 2 bis 4 sein soll; Verbindungen der Formel

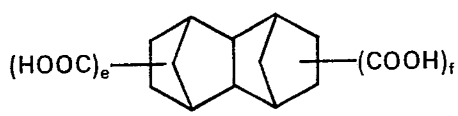 III

worin e und f ganze Zahlen sind und die Summe von e und f eine Zahl von 2 bis 4 sein soll; Verbindungen der Formel

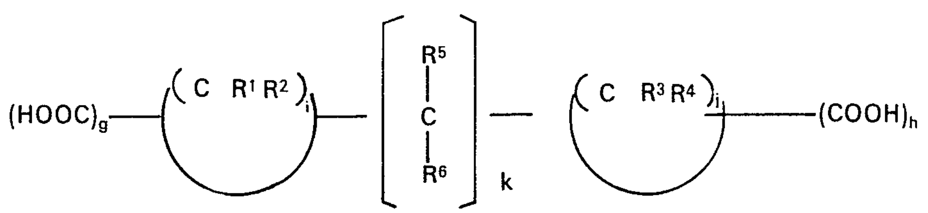 IV

worin g und h ganze Zahlen sind und die Summe von g und h eine Zahl von 2 bis 4 sein soll, i und j für ganze Zahlen von 4 bis 8 und k für Null oder eine ganze Zahl von 1 bis 10 stehen und

$R^1$ bis $R^6$ Wasserstoffatome oder Alkylreste mit 1 bis 4 C-Atomen bedeuten;

Verbindungen der Formel

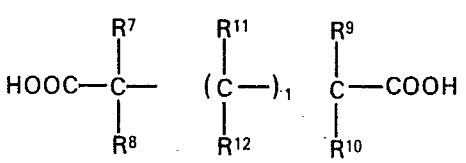 V

worin 1 für eine ganze Zahl von 1 bis 4 steht und $R^7$ und $R^9$ eine Alkylgruppe mit 1 bis 4 C-Atomen und $R^8$, $R^{10}$, $R^{11}$ und $R^{12}$ ein Wasserstoffatom oder eine Alkylgruppe mit 1 bis 4 C-Atomen bedeuten.

Selbstverständlich können anstelle der Säuren auch deren veresterungsfähige Derivate wie Anhydride oder Ester verwendet werden. Als besonders vorteilhaft haben sich erwiesen: 1,2,3,6-Tetrahydrophthalsäure, Methyltetrahydrophthalsäure, Hexahydrophthalsäure, von denen wiederum die Tetrahydrophthalsäure eine besonders bevorzugte Stellung einnimmt.

Setzt man die mehrwertigen Carbonsäuren a) als alleinige Säurekomponente ein, erhält man besonders stabile Dispersionen.

Für die Herstellung der Alkydharze bzw. Polyester A bevorzugte andere mehrbasische Carbonsäuren b) sind solche mit 4–12 C-Atomen, wie Phthalsäure, Isophthalsäure, Terephthalsäure, Trimellithsäure, Adipinsäure, Bernsteinsäure, Glutarsäure sowie Fumarsäure, Azelainsäure und Maleinsäure und deren veresterungsfähige Derivate, wobei Fumarsäure und Maleinsäure zu maximal 20 Mol-% im Gemisch der Polycarbonsäuren enthalten sein sollten. Kombinationen von 10–30 Mol-% Phthalsäure und 70–90 Mol-% Tetrahydrophthalsäure verdienen besondere Erwähnung, da sie zu sowohl guten Lagerstabilitäten als auch hervorragend verlaufenden Lacken führen.

Die Polyester A können allein aus mehrbasischen Carbonsäuren und mehrwertigen Alkoholen aufgebaut werden. Es ist aber auch möglich, sie durch Einkondensation von Monocarbonsäuren c) – vorzugsweise mit 6–35 C-Atomen – zu

modifizieren. Bevorzugte Monocarbonsäuren c) sind Benzoesäure, Hexahydrobenzoesäure, Butylbenzoesäure, Tolylsäure, α-Äthylhexansäure, Fettsäuren und deren Gemische aus natürlichen Ölen wie Sojafettsäure, Safflorölfettsäure, Baumwollsaatölfettsäure, Leinölfettsäure, Erdnussölfettsäure, Ricinenfettsäure, wobei die Öle auch als solche eingesetzt und durch Umesterungs- und ggf. Dehydratisierungsreaktionen in den Polyester eingebaut werden können. Ölmodifizierte Polyester- als Alkydharze bezeichnet – führen im Rahmen der Erfindung zu besonders füllkräftigen Überzügen.

Für die Herstellung der Alkydharze und Polyester A bevorzugte mehrwertige Alkohole sind solche mit 2-6, vorzugsweise 2-4 OH-Gruppen und 2-24 C-Atomen pro Molekül wie Äthylenglykol, Propylenglykole, Butandiole, Neopentylglykol, Hexandiole, Trimethylpentandiol-1,3, Dimenthylolcyclohexan, Perhydrobisphenole, alkoxylierte Bisphenole mit 2-Alkylenoxideinheiten pro Molekül, Glycerin, Trimethyloläthan, Trimethylolpropan, Trimethylolhexan, Pentaerythrit, Dipentaerythrit, Sorbit und deren Mischungen. Als besonders geeignet haben sich Neopentylglykol, Trimethylolpropan, Dimethylolcyclohexan und Perhydrobisphenol erwiesen.

Die Alkydharze bzw. Polyester A können auch einwertige Alkohole wie Methanol, Propanol, Cyclohexanol, 2-Äthylhexanol, Benzylalkohol in Mengen bis zu 15 Gew.-% bezogen auf Alkydharz bzw. Polyester A, einkondensiert enthalten. Ebenso ist es möglich, bis zu 25% der Esterbindungen durch Urethanbindungen zu ersetzen.

Die in den Rahmen der Erfindung fallenden Alkydharze bzw. Polyester A sind grösstenteils wasserunlösliche, schmelzbare Massen, welche ohne weitere Zusätze nicht in der wässrigen Phase verteilbar sind. Es ist deswegen nicht erwünscht, Polyalkylenoxide, sog. Polywachse, als mehrwertige Alkohole zur Synthese von A zu verwenden, da derartige Bestandteile das Harz hydrophil machen, was sich in geringer Wasserbeständigkeit des gehärteten Produktes auswirkt.

Die Auswahl von Art und Menge der einzelnen zum Alkylharz bzw. Polyester A zu kondensierenden Rohstoffe richtet sich nach dem gewünschten Molekulargewicht und nach dem Einsatzgebiet des damit herzustellenden Lackes. Die Zusammenhänge zwischen dem Molekulargewicht und der Rohstoffmenge sind eingehend bei U. Holfort: Farbe und Lack 68 (1962), S. 513–17, S. 598–607 beschrieben.

Hohe Gehalte aromatischer Bestandteile verleihen den Überzügen besondere Härte, hohe Gehalte aliphatischer Bestandteile geben ihnen gute Elastizität. Für die Herstellung von Einbrennlacken verwendet man in der Regel Alkydharze bzw. Polyester A mit Hydroxylzahlen von 80–130, vorzugsweise ca.100. Für Einbrennlacke kommt man im allgemeinen mit Ölgehalten bis zu 45 Gew.-% aus.

Wegen der Vielzahl der möglichen Zusammensetzungen von ölfreien bis zu ölreichen Harztypen kann der anzustrebende Viskositätsbereich nur grob angegeben werden. In der Regel entspricht die Viskosität der Alkydharze bzw. Polyester A einer Auslaufzeit nach DIN 53211, gemessen als 50 gew.-%ige Lösung in Xylol, von 50 bis 250 sec., für kurz- und mittelölige Harze vorzugsweise von 90–130 sec., für ölfreie Harze vorzugsweise von 80–130 sec.

Die Herstellung der Alkydharze bzw. Polyester A kann nach bekannten Verfahren erfolgen, vgl. «Methoden der Organischen Chemie» (Houben-Weyl), Bd. 14/2, Teil 2, 4. Aufl., Georg Thieme Verlag, Stuttgart 1963, S. 1–5, 21–23, 40–44, oder C.R. Martens, Alkyd Resins, Reinhold Plastics Appl. Series, Reinhold Publ. Comp. 1961, S. 51–59. Danach werden mehrwertige und ggf. einwertige Alkohole sowie mehrbasische Carbonsäuren und ggf. Monocarbonsäuren, ggf. Öle sowie deren veresterungsfähige Derivate durch Schmelz- oder Azeotropveresterung, bevorzugt in einer Inertatmosphäre, z. B. bei Temperaturen von 140–260 °C, umgesetzt. Die Reaktion kann mittels Messung von Säurezahl und Viskosität verfolgt werden.

Die Polykondensation kann in einer oder in mehreren Stufen erfolgen, wobei in bekannter Weise z. B. die Verkochung eines Öles oder die Nachsäuerung zum Polyhalbester jeweils als getrennte Stufe von der Polyesteraufbaureaktion durchgeführt wird. Das mittlere Molekulargewicht der Alkydharze bzw. Polyester A wird dampfdruckosmometrisch in Dioxan und Aceton bestimmt, wobei bei differierenden Werten der niedrigere als korrekt angesehen wird.

Die erfindungsgemässen Dispersionen können hergestellt werden, indem man zuerst ein Alkydharz bzw. einen Polyester auf Basis der erwähnten Polycarbonsäuren herstellt und dieses anschliessend mit Hilfe von emulgierenden Substanzen in wässriger Phase dispergiert.

Die Alkydharze bzw. Polyester A können in wässriger Phase dispergiert werden, indem man sie zusammen mit einem oder mehreren Emulgatoren und ggf. weiteren Zusatzstoffen in wasserverträglichen oder teilweise wasserverträglichen Lösemitteln, wie z. B. Aceton, Äthylalkohol, Isopropanol löst, diese Lösung in die wässrige Phase einrührt und das organische Lösemittel anschliessend durch Verdampfung entfernt.

Bevorzugt wird hingegen ein Verfahren, wonach A in der Schmelze bei 80–120 °C mit den Zuschlägen innig verrührt und anschliessend in diese Schmelze die wässrige Phase eingerührt wird.

Dieser Prozess kann in der Regel in einem zur Herstellung von Alkydharzen üblichen Reaktor vorgenommen werden. Schnellaufende Mischaggregate oder Rührwerke sind dabei meist nicht erforderlich. Selbstverständlich kann die Schmelzdispergierung auch durch Zugabe der organischen Harzphase in die wässrige Phase erfolgen. Dabei ist es ebenfalls möglich, die Emulgatoren B in der wässrigen Phase C verteilt vorzulegen und das emulgatorfreie Alkyd- bzw. Polyesterharz A in das Gemisch von B und C einzutragen.

Die zur Dispergierung der Alkydharze bzw. Polyester A benötigten Emulgatoren B sind Polyester, welche direkt über Esterbindungen oder über ein Zwischenstück mit einer oder mehreren Polyalkylenoxidketten mit 2-4 C-Atomen im Alkylenoxidrest gekoppelt sind, wobei sich dieses Zwischenstück von einem Melaminharz oder Polyisocyanatbaustein oder Silicon ableitet. Diese letztgenannten modifizierten Polyester werden im weiteren Emulgatorharze genannt und führen zu besonders verträglichen Überzügen. Derartige Emulgatorharze können aus einem ggf. ölmodifizierten Polyester als hydrophoben Teil und einem ggf. durch Methoxy-, Äthoxy-, Propoxy- oder Butoxygruppen einseitig blockierten Polyalkylenoxid, z. B. Polyäthylen oxid oder Polypropylenoxid mit 6-100, vorzugsweise 10-70 Alkylenoxideinheiten mit 2-4 C-Atomen im Alkylenrest als hydrophilen Teil synthetisiert werden. Der Polyesterteil kann dabei aus den gleichen Rohstoffen hergestellt werden, die bereits oben für das zu emulgierende Harz A beschrieben wurden, kann aber zusätzlich mit Polyalkylenoxidresten (z. B. Polywachs) modifiziert werden. Es ist - wie bereits angedeutet - möglich, den Polyesterteil des Emulgatorharzes separat herzustellen und ihn anschliessend mit dem Polyalkylenoxid über ein Melaminharz oder ein Polyisocyanat zu verknüpfen. Derartige Verfahrensweisen sind beschrieben z. B. in den DE-OS 2503389, 2455896, 2555896, 2503388, 2528212, 2556621. Die verwendeten Polyalkylenoxide können Homopolyäther, aber auch Copolyäther in Blockverteilung oder statistischer Verteilung sein.

Die Menge an Polyalkylenoxidresten im Emulgatorharz kann 5-70, vorzugsweise 5-30 Gew.-%, bezogen auf das Emulgatorharz, betragen. Das Emulgatorharz enthält ausserdem vorzugsweise COOH-Gruppen, welche nicht, teilweise oder ganz neutralisiert sein können und im Harz in einer Menge vorhanden sind, dass die Säurezahl im nicht neutralisierten Zustand 0-50, vorzugsweise 15-35, beträgt. Als Neutralisationsmittel werden üblicherweise Alkalien, Ammoniak und Amine verwandt, wobei Triäthylamin, Triäthanolamin, Diäthanolamin, Dimethyläthanolamin, Methyldiäthanolamin,N,N Dimethylaminomethylpropanol besonders geeignet sind.

Besonders gut geeignete Emulgatorharze werden aus einem OH-reichen Polyester auf Basis Phthalsäure und/oder Tetrahydrophthalsäure und Trimethylolpropan durch Umsetzung im Sinne der DE-OS 2556621 und 2528212 mit einem Polyäthylenoxid-Isocyanat-Vorkondensat hergestellt, wobei der Gehalt an Polyäthylenoxidresten Emulgatorharz zwischen 10 und 20 Gew.-% liegt und die Polyäthylenoxideinheiten mittlere Molekulargewichte zwischen 800 und 3000 aufweisen.

Ein besonders wirksames Emulgatorharz besteht aus einem Kondensat von verzweigten Polyestern und den Umsetzungsprodukten von monoalkylterminierten Polyäthylenoxiden mit Diisocyanaten, wie sie in den DE-OS 2556621 und 2528212 (= US 4028313) beschrieben sind.

Zur Herstellung der erfindungsgemässen Dispersionen können grundsätzlich sämtliche der beschriebenen emulgierenden und Schutzkolloide bildenden Stoffe B einzeln und in Mischung verwendet werden. Es ist jedoch bevorzugt, für Emulgator-Mischungen oligomere und/oder polymere Emulgatorharze der beschriebenen Art einzusetzen. Besonders gute Dispersionen erhält man bei der Verwendung von Gemischen aus einem Emulgatorharz und einem niedermolekularen ionischen oder vorzugsweise nichtionischen Emulgator, wobei die Gesamtmenge der emulgierenden Substanzen unterhalb von 10 Gew.-% (bezogen auf nichtflüchtige Bestandteile der Dispersion) betragen soll.

Die wässrige Phase C enthält neben Wasser ggf. Neutalisationsmittel, dessen Menge so zu bemessen ist, dass sie zur teilweisen oder völligen Neutralisation oder im Alkydharz bzw. Polyesterharz A ggf. noch vorhandenen Carboxylgruppen mindestens ausreicht. Als Neutralisationsmittel sind Alkalien, Ammoniak oder vorzugsweise die oben genannten Amine einsetzbar. Zweckmässigerweise wird bei der Emulgierung in der Schmelze das Amin mit einem Teil des Wassers in die Schmelze eingerührt und nach dem Homogenisieren der Rest des Wassers zur Einstellung der Dispersion auf den gewünschten Festgehalt, der im allgemeinen zwischen 40 und 60% liegt, zugegeben.

Bei einer bevorzugten Ausführungsform zur Herstellung der erfindungsgemässen Dispersionen werden zunächst Alkydharz bzw. Polyester A, Emulgatorharz und ggf. weitere emulgierende Substanzen B in der Schmelze bei 80-120 °C innig durchmischt dann bei 80-100 °C ein Teil der wässrigen Phase, welcher ggf. das Neutralisationsmittel enthält, unter Rühren zugegeben und nach dem Homogenisieren der Rest des Wassers bis zur Einstellung des gewünschten Festgehaltes und der gewünschten Viskosität zugegeben.

Die erfindungsgemässen Dispersionen können, falls gewünscht, während oder nach ihrer Herstellung mit anderen Polymeren, z. B. Polyacrylaten, Polyurethan sowie Hartharzen, unmodifizierten und modifizierten Polymeren, wie sie etwa bei H. Kittel, Lehrbuch der Lacke und Beschichtungen, Bd. I, Teil 1, S. 122-445, beschrieben sind, kombiniert werden.

Zur Herstellung von Überzügen gibt man den wässrigen Dispersionen wasserverdünnbare Aminoplastharze bei, wobei das Gewichtsverhältnis von Alkydharz bzw. Polyester A zu Aminoplast (bezogen auf festes Harz) zwischen 95:5 bis 50:50 liegt, d. h. der Aminoplast-Anteil beträgt 5-50, vorzugsweise 10-30 Gew.-% Aminoplast, bezogen auf die Summe von Harz A und Aminoplast.

Als Aminoplastharze sind beispielsweise Melamin-Formaldehyd- oder Harnstoff-Formaldehyd-Kondensationsprodukte anzusehen. Melaminharze sind alle herkömmlichen nicht verätherten oder mit gesättigten Monoalkoholen mit 1 bis 4-C-Atomen verätherten Melamin-Formaldehyd-Kondensate, wie sie z. B. in der FR-PS 943411 oder bei D. H. Solomon, The Chemistry of Organic Filmformers, 235-240, John Wiley & Sons,

Inc., New York, 1967, beschrieben sind. Die Melaminharze können jedoch auch ganz oder teilweise durch andere vernetzende Aminoplasten, wie sie z. B. in «Methoden der organischen Chemie» (Houben-Weyl), Bd. 14/2, Teil 2, 4. Aufl., Georg Thieme Verlag, Stuttgart, 1963, 319 ff. beschrieben sind, ersetzt werden.

Die erfindungsgemässen Dispersionen sind bei Raumtemperatur monatelang lagerstabil. Als «lagerstabil» wird eine Dispersion dann bezeichnet, wenn sie für einen angegebenen Zeitraum weder sichtbare Zerfallserscheinungen wie Ausflocken, Absetzen o. dgl. noch wesentliche Änderungen in den Eigenschaften eines damit hergestellten Lackes zeigt. Die erfindungsgemässen Dispersionen sind auch bei höheren Temperaturen, wie sie bei Lagerung in der Sonnenstrahlung ausgesetzten Behältern häufig auftreten, sehr stabil. Sie überstehen Lagerungen bei 50°C für mindestens 3 Tage, meist aber wesentlich längere Zeiten ohne Qualitätsverlust.

Man kann den erfindungsgemässen Dispersionen übliche Hilfs- und Zusatzstoffe zusetzen, sofern sie die Stabilität der Dispersion nicht zu sehr herabsetzen, z. B. Schutzkolloide, Antischaummittel, Antiabsetzmittel, Frostschutzmittel sowie viskositätsbeeinflussende Zusätze.

Die erfindungsgemässen Dispersionen lassen sich in bekannter Weise zu Lacken verarbeiten. Dazu können sie - ggf. unter Zusatz von Kombinationsharzen und Wasser - falls erwünscht mit üblichen Pigmenten, wie z. B. Titandioxid, Bariumchromat, Eisenoxid u.a. nach herkömmlichen Verfahren angeteigt und verarbeitet werden. Es ist auch möglich, wässrige Pigmentdispersionen, sog. Slurries, zu verwenden oder Zusatzharze mit dem Pigment anzureiben und anschliessend mit der Dispersion zu mischen.

Mitunter ist es aus Gründen besserer Verarbeitbarkeit und Pigmentaufnahme günstig, die Dispersion bei der Lackherstellung auf bestimmte pH-Werte, z. B. 7,5-8,5 zu bringen. Meist verwendet man dazu die bereits zur Neutralisation benutzten Amine. Ausserdem können zusätzliche Hilfsstoffe wie Verlaufmittel, Vernetzunskatalysatoren u. dgl. zugefügt werden. Die mit den erfindungsgemässen Dispersionen hergestellten Lacke lassen sich nach üblicher Applikationstechnik, z. B. durch Tauchen, Spritzen, Giessen auf die zu lackierenden Materialien auftragen. Die dazu notwendige Viskosität stellt man in der Regel durch Zugabe von Wasser ein.

Geringe Zusätze von wassermischbaren Lösemitteln wie Äthanol oder Butylglykol können ebenfalls zugeführt werden; vorzugsweise wird darauf jedoch verzichtet.

Die aufgetragenen Lackfilme können bei höherer Temperatur, z. B. zwischen 60 und 270°, ausgehärtet werden; der höhere Temperaturbereich wird dabei vorzugsweise für ölarme Alkydharze und ölfreie Polyester benutzt.

Die erfindungsgemässen Dispersionen können nicht nur zur Herstellung von Lacken, sondern auch als Ausgangsmaterialien für nicht-flächige Gebilde, wie Formkörper, Gele u. dgl., eingesetzt werden.

Die folgenden Beispiele erläutern die Erfindung, ohne sie einzuschränken. Die angegebenen Teile sind Gewichtsteile; Prozentangaben bedeuten Gew.-%.

Beispiele

I. Herstellung der Emulgatoren

Emulgator 1

a) Herstellung einer hydrophilen Isocyanatkomponente

In einer 2-Liter-Rührbecher-Apparatur, die mit Innenthermometer, Rührer, Tropftrichter und Gaseinleitungsrohr versehen ist, werden 400 g eines auf n-Butanol gestarteten Polyäthylenoxidalalkohols des Molekulargewichts 2000 30 Minuten bei 120°C unter Anlegen eines Vakuums (15 Torr) entwässert. In die auf 100°C abgekühlte Schmelze werden zunächst 2 ml Benzoylchlorid eingerührt; danach fügt man 33,6 g Hexamethylendiisocyanat in einem Guss zu.

Nach 60 Minuten Reaktionszeit wird der Isocyanat-Gehalt der Mischung bestimmt. Die NCO-Zahl der Mischung beträgt danach 1,8-1,9% NCO (ber.: 1,95%).

Nach Abkühlen der Schmelze erhält man die für weitere Umsetzungen geeignete hydrophile Isocyanatkomponente (a) als wachsartig kristalline Substanz.

b) Herstellung eines Polyesters

Aus 2 Mol Hexahydrophthalsäureanhydrid, 1 Mol Phthalsäureanhydrid, 1 Mol Maleinsäureanhydrid und 3,5 Mol Trimethylolpropan wird unter Stickstoffatmosphäre in der Schmelze ein Polyester mit einer Säurezahl von $< 4$, einer OH-Zahl von 264, und einem mittleren Molekulargewicht $\bar{M}_n$ von 1580 hergestellt.

c) Herstellung des Emulgators

340 g des erhaltenen Polyesters werden 30 Minuten bei 140°C und 12 Torr entwässert. In die Schmelze werden dann bei 120°C 43,3 g der hydrophilen Isocyanatkomponente (a) zugegeben. Die Schmelze wird unter Stickstoff 1 Stunde bei 120°C gerührt. Danach ist kein freies NCO mehr nachweisbar. Anschliessend werden in die Schmelze 26,2 g Phthalsäureanhydrid hinzugegeben. Nach 70 Minuten Reaktionszeit bei 120°C wird die Säurezahl des modifizierten Polyesters ermittelt: sie beträgt 28,4 (ber. 28,1). In die heisse Schmelze des auf diese Weise modifizierten Polyesters werden 14,5 g 2-Dimethylaminoäthanol eingetragen. Der Gehalt des modifizierten Polyesters an Äthylenoxideinheiten liegt bei 9,45 Gew.-%, der Gehalt an Carboxylatgruppen beträgt 1,53 Gew.-%.

Emulgator 2

a) 134 g Trimethylolpropan und 130,7 g Tetrahydrophthalsäureanhydrid werden bei 220°C unter Stickstoffatmosphäre bis zur Säurezahl 4 verestert. Die Viskosität der erhaltenen Vorstufe (a) entsprach einer Auslaufzeit (gemessen als 60%-ige Lösung in Dimethylformamid nach DIN 53211) von 170 sec.

b) 500 g dieser Vorstufe und 88,2 g der hydrophilen Isocyanatkomponente (s. Herstellung des Emulgators 1) werden bei 100–105 °C miteinander umgesetzt, bis keine freien Isocyanatgruppen mehr nachweisbar sind.

c) 580 g des unter b) erhaltenen Produktes werden mit 39 g Tetrahydrophthalsäureanhydrid bei 120 °C zu einem Polyhalbester mit einer Säurezahl von ca. 27 umgesetzt.

Zu 610 g der Stufe c) gibt man unter Rühren bei 95–100 °C vorsichtig 26,1 g Dimethyläthanolamin. Das Harz erstarrt beim Abkühlen zu einer zähelastischen, schmelzbaren Masse.

Emulgator 3

Auf Nonylphenol gepropftes Äthylenoxid (Molverhältnis 1:20) mit folgenden Eigenschaften:

Trübungspunkt (1%-ig in Wasser): ca. 100 °C

Oberflächenspannung (0,1 g/l Wasser): 44.0 dyn/cm

Netzwirkung (DIN 53 901): ca. 60 sec bei 60 °C

Fp. ca. 30 °C

Emulgator 4

Herstellung analog 1; jedoch werden zu 340 g des unter b) erhaltenen Polyesters 60 g der hydrophilen Isocyanatkomponente (a) gegeben.

II. Herstellung der Alkydharze bzw. Polyester A

Harz (A)

173,1 Tle der für Harz B verwendeten Vorstufe, 83,1 Tle Trimethylolpropan, 11,8 Tle Neopentylglykol, 11,9 Tle Benzoesäure und 115,8 Tle Tetrahydrophthalsäureanhydrid werden nach einer Aufheizphase in einem geeigneten Reaktor unter $N_2$-Durchleitung bei ca. 195 °C so lange verestert, bis die Säurezahl 16 beträgt. Die Endviskosität des Harzes, gemessen 50%ig in Xylol nach DIN 53211, entsprach einer Auslaufzeit von119 sec; der Ölgehalt des Harzes lag bei 41%.

Harz (B)

84,6 Tle Ricinusöl, 3,56 Tle Trimethylolpropan und 11,84 Tle Phthalsäureanhydrid werden bei 250 °C unter Dehydratisierungsbedingungen zu einem Produkt mit einer Säurezahl von 25–35 verkocht.

137,4 Tle dieser Vorstufe, 90,2 Tle Trimethylolpropan, 11,8 Tle Neopentylglykol, 11,9 Tle Benzoesäure und 120,4 Tle Tetrahydrophthalsäureanhydrid werden nach einer Aufheizphase in einen geeigneten Reaktor unter $N_2$-Durchleitung bei ca. 195 °C solange verestert, bis die Säurezahl des Produktes 15–16 betrug. Die Endviskosität des Harzes, gemessen 50%ig in Xylol nach DIN 53211, entsprach einer Auslaufzeit von 120 sec. Der Ölgehalt lag bei ca. 35%.

Harz (C)

134 Tle Trimethylolpropan, 74,5 Tle Adipinsäure, 64,4 Tle Tetrahydrophthalsäureanhydrid und 81,2 Tle Hexahydrobenzoesäure werden unter einer $N_2$-Atmosphäre in einem geeigneten Reaktor nach einer Aufheizphase bei ca. 200 °C bis zu einer Säurezahl von 16 verestert. Die Viskosität des Harzes, gemessen als 50%ige Lösung in Xylol nach DIN 53 211, entsprach einer Auslaufzeit von 113 sec. Der Anteil an einkondensierten Tetrahydrophthalsäureresten, bezogen auf die gesamte Säurekomponente, beträgt ca. 45%.

Beispiel 1

Herstellung der Dispersion: 19539,0 Tle Harz B, 840,4 Tle Emulgator 4 und 630,3 Tle Emulgator 3 werden zusammengegeben, unter Rühren in 30 Minuten in einer $N_2$-Atmosphäre auf 120 °C erwärmt und 15 Min bei dieser Temperatur gehalten. Dann wird bei ca. 100 °C ein Gemisch aus entionisiertem Wasser und Dimethyläthanolamin (im folgenden DMEA) zudosiert, wobei die Temperatur im Reaktor auf 50–40 °C heruntergeht. Die Menge an Wasser und DMEA ist dabei so bemessen, dass

a) die Carboxylgruppen des Harzes vollständig neutralisiert werden und

b) die sich bildende Dispersion einen Festgehalt von ca. 40% besitzt. Man erhält nach dem Abkühlen eine feinteilige, fliessfähige Dispersion.

Herstellung von pigmentierten Weisslacken

4,8 Tle DMEA (50%ig in Wasser), 100 Tle wasserlösliches Melaminharz (90%ig in i-Propanol) mit einer Viskosität nach Gardner von Z 2–Z 6, 210 Tle $TiO_2$-Pigment und 180 Tle Wasser werden 15 Minuten auf der Perlmühle verrieben, dann 525 Tle obige Dispersion zugegeben und weitere 5 Minuten angerieben. Der so erhältliche Lack hat einen Pigmentierungsgrad von 70% und ein Verhältnis von Alkyd- zu Melaminharz von 7:3. Nach einer Reifezeit wurde der Lack mit entionisiertem Wasser auf eine Viskosität entsprechend einer Auslaufzeit von 20 sec. verdünnt und anschliessend auf Glasplatten bzw. Stahlbleche aufgespritzt. Nach einer Ablüftzeit wurden die beschichteten Gegenstände 30 Minuten bei 140 °C eingebrannt.

Man erhielt gut verlaufende Beschichtungen mit folgenden Eigenschaften:

Schichtdicke ca. 40 µm

Glanz (Gardner 20°): 76; Dornbiegeversuch (ASTM D-522-60): 32%; Erichsenwert (DIN 53 156): 7,5; Gitterschnitt (DIN 53 151): 0–1;

Bleistifthärte: HB

Pendelhärte (DIN 53 157): 104 sec

Schlagtiefung direkt (ASTM-D-2794): 50+

Wasserfestigkeit in Wasser, Raumtemperatur: 10 Tage ohne Erweichung und Blasenbildung (DIN 53 209)

Lagerstabilität

Die Dispersion ist bei Raumtemperatur wochenlang lagerstabil.Bei 50 °C-Lagerung übersteht sie 5 Tage ohne Beeinträchtigung. Erst nach 12 Tagen bei 50 °C bildet sich eine geringe Menge redispergierbarer Bodensatz.

An einem Weisslack, der mit einer 12 Tage bei 50 °C gelagerten Dispersion hergestellt wurde, konnten folgende Werte gemessen werden:

Schichtdicke ~ 40 µm

Glanz (Gardner 20°): 76;

Erichsenwert (DIN 53156): 8,0;
Bleistifthärte: HB;
Schlagtiefung dir.: 60+;
Pendelhärte: 85 sec.
Dornbiegeversuch: 32%;
Gitterschnitt: 1
Wasserfestigkeit in Wasser bei Raumtemperatur: 10 Tage ohne Erweichung und Blasenbildung

Beispiel 2

1860,0 Tle Harz B, 80,0 Tle Emulgator 2, 60,0 Tle Emulgator 3 werden – wie in Beispiel 1 beschrieben – zu einer 40%igen Dispersion verarbeitet und entsprechend dem in Beispiel 1 beschriebenen Verfahren zu einem Weisslack weiterverarbeitet. Man erhält einen Überzug mit folgenden Messwerten:
Schichtdicke 33 µm
Glanz (Gardner 20°): 77;
Erichsenwert (DIN 53156) 8,9;
Bleistifthärte: HB;
Schlagtiefung dir.: 44/
Pendelhärte: 94 sec;
Dornbiegeversuch: 32%;
Gitterschnitt: 1.
Die Dispersion ist nach 12tägiger Lagerung bei 50 °C noch völlig in Ordnung.

Beispiel 3

1860,0 Tle Harz A, 80,0 Tle Emulgator 1, 60,0 Tle Emulgator 3 wurden – wie im Beispiel 1 beschrieben – zu einer 40%igen Dispersion verarbeitet. Aus der Dispersion wurde entsprechend dem in Beispiel 1 aufgeführten Vorgehen ein Weisslack hergestellt. Ein daraus durch Einbrennen (30 Minuten bei 140 °C) gewonnener Überzug besass folgende Eigenschaften:
Schichtdicke 31 µm
Glanz (Gardner 20°): 79;
Erichsenwert (DIN 53156): 8,0
Bleistifthärte: HB;
Schlagtiefung dir.: 80+
Gitterschnitt: 0–1
Wasserlagerung bei 40 °C: mindestens 2 Tage ohne Erweichung und Blasenwurf

Beispiel 4

Herstellung der Dispersion:

3245,3 Tle Harz C, 139,6 Tle Emulgator 2, 104,7 Tle Emulgator 3 werden bei 110–125 °C zu einer homogenen Schmelze verrührt. Diese Schmelze wird bei ca. 115 °C unter Rühren in die vorgelegte auf ca. 40 °C erwärmte Wasserphase eingetragen, welche so viel Wasser und Dimethyläthanolamin enthält, dass ca. 90% der in Harz C vorhandenen COOH-Gruppen neutralisiert werden und der Festgehalt der sich bildenden Dispersion bei ca. 50% liegt. Es wird weitere 30 Minuten nachgerührt und dann mit Wasser auf 45% Harzgehalt eingestellt. Man erhält eine sehr lagerstabile Dispersion, welche 30 Tage bei 50 °C ohne Bodensatzbildung übersteht.

Herstellung eines Weisslacks:
476 Tle wasserlösliches Melaminharz, 2,3 Tle Dimethyläthanolamin, 750 Tle $TiO_2$-Pigment, und 333 Tle Wasser werden 15 Minuten in einer Perlmühle angerieben. Aus dieser Anreibung und der vorbeschriebenen Dispersion wird durch Vermischen ein Weisslack mit einem Gewichtsverhältnis Alkyd-: Melaminharz = 7:3 und einem Pigmentierungsgrad von 75% hergestellt, nach 1 Tag Reifezeit mit Wasser auf eine Spritzviskosität entsprechend einer Auslaufzeit von 21 sec. (DIN 53211), verdünnt auf Glasplatten bzw. Bleche aufgespritzt und 30 Minuten bei 140 °C eingebrannt. Man erhält eine Lackierung mit folgenden Eigenschaften:
Glanz (Gardner 20 °C): 71
Erichsenwert: 6,5
ASTM-Dorn: 32%
Gitterschnitt: 1
Bleistifthärte: 4 H
Pendelhärte: 129 sec.
Lagert man die Lackierungen in Wasser bei Raumtemperatur, so zeigen sich nach 20 Tagen keine Blasenbildung, Erweichung oder Haftungsverlust.

**Patentansprüche:**

1. Wässrige Dispersionen aus

A) 25–60 Gew.-% mindestens eines dispergierten Alkydharzes bzw. ölfreien Polyesters mit einem mittleren Molekulargewicht $\bar{M}_n$ zwischen 800 und 6000,

B) 3–15 Gew.-% mindestens eines Emulgators und

C) 25–62 Gew.-% wässriger Phase,

jeweils bezogen auf die Summe der Komponenten A, B und C,

dadurch gekennzeichnet, dass die Dispersionen frei von organischen Lösungsmitteln sind,

die mittlere Teilchengrösse der Harzphase 50 bis 3000 nm beträgt, das Alkydharz bzw. der ölfreie Polyester A eine Säurezahl von 3–25 besitzt und die Säurekomponente des Alkydharzes bzw. des ölfreien Polyesters A zu

a) 10–100 Mol-% aus einkondensierten Resten mehrbasischer Carbonsäuren mit 4–30 C-Atomen, bei denen die Carboxylgruppen an sekundären und/oder tertiären C-Atomen hängen, die nicht Teil eines aromatischen Systems sind und mit anderen C-Atomen nicht über eine Mehrfachbindung verknüpft sind,

b) 0–90 Mol-% aus einkondensierten Resten anderer aliphatischer und/oder aromatischer mehrbasischer Carbonsäuren mit 4–12 C-Atomen und

c) 0–60 Gew.-% aus einkondensierten Resten aliphatischer, cycloaliphatischer und/oder aromatischer Monocarbonsäuren mit 6–35 C-Atomen besteht, wobei die Molprozente jeweils auf die Summe der Komponenten a und b und die Gewichtsprozente c auf das Alkydharz bzw. den Polyester A bezogen sind,

und der Emulgator B ein Polyester ist, welcher direkt über Esterbindungen oder über ein Zwischenstück mit einer oder mehreren Polyalkylenoxidketten mit 2–4 C-Atomen im Alkylenoxidrest

gekoppelt ist, wobei sich dieses Zwischenstück von einem Melaminharz oder Polyisocyanatbaustein oder Silicon ableitet.

2. Dispersionen nach Anspruch 1, dadurch gekennzeichnet, dass der Emulgator B 5–70 Gew.-% Polyalkylenoxidreste enthält.

3. Dispersionen nach Ansprüchen 1 und 2, dadurch gekennzeichnet, dass der Emulgator B ganz oder teilweise neutralisierte Carboxylgruppen enthält, deren Anzahl einer Säurezahl von 15 bis 33 im nicht-neutralisierten Zustand entspricht.

4. Dispersionen nach Ansprüchen 1–3, dadurch gekennzeichnet, dass der Emulgator B aus einem OH-reichen Polyester auf Basis Phthalsäure und/oder Tetrahydrophthalsäure und Trimethylolpropan durch Umsetzung mit einem Polyäthylenoxid-Isocyanat-Vorkondensat hergestellt wird, wobei der Gehalt an Polyäthylenoxidresten im Emulgator B zwischen 10 und 20 Gew.-% liegt und die Polyäthylenoxideinheiten mittlere Molekulargewichte zwischen 800 und 3000 aufweisen.

5. Verfahren zur Herstellung wässriger Dispersionen aus

A) 25–60 Gew.-% mindestens eines dispergierten Alkydharzes bzw. ölfreien Polyester mit einem mittleren Molekulargewicht $\bar{M}_n$ zwischen 800 und 6000,

B) 3–15 Gew.-% mindestens eines Emulgators und

C) 25–62 Gew.-% wässriger Phase,

jeweils bezogen auf die Summe der Komponenten A, B und C, wonach man das Alkydharz bzw. den ölfreien Polyester A in der Schmelze bei Temperaturen von 80–120 °C mit dem Emulgator homogenisiert und in diese Schmelze das Waser bzw. die wässrige Phase C oder umgekehrt die Schmelze in das Wasser bzw. in die wässrige Phase C einrührt, dadurch gekennzeichnet, dass die Dispersionen frei von organischen Lösungsmitteln sind, die mittlere Teilchengrösse der Harzphase 50 bis 3000 nm beträgt, das Alkydharz bzw. der ölfreie Polyester A eine Säurezahl von 3–25 besitzt und die Säurekomponente des Alkydharzes bzw. des ölfreien Polyesters A zu

a) 10–100 Mol-% aus einkondensierten Resten mehrbasischer Carbonsäuren mit 4–30 C-Atomen, bei denen die Carboxylgruppen an sekundären und/oder tertiären C-Atomen hängen, die nicht Teil eines aromatischen Systems sind und mit anderen C-Atomen nicht über eine Mehrfachbindung verknüpft sind,

b) 0–90 Mol-% aus einkondensierten Resten anderer aliphatischer und/oder aromatischer mehrbasischer Carbonsäuren mit 4–12 C-Atomen und

c) 0–60 Gew.-% einkondensierten Resten aliphatischer, cycloaliphatischer und /oder aromatischer Monocarbonsäuren mit 6–35 C-Atomen besteht, wobei die Molprozente jeweils auf die Summe der Komponenten a und b und die Gewichtsprozente c) auf das Alkydharz bzw. den Polyester A bezogen sind, und der Emulgator B ein Polyester ist, welcher direkt über Esterbindungen oder über ein Zwischenstück mit einer oder mehreren Polyalkylenoxidketten mit 2–4 C-Atomen im Alkylenoxidrest gekoppelt ist, wobei sich dieses Zwischenstück von einem Melaminharz oder Polyisocyanatbaustein oder Silicon ableitet.

6. Verfahren nach Anspruch 5, dadurch gekennzeichnet, dass der Emulgator B 5–70 Gew.-% Polyalkylenoxidreste enthält.

7. Verfahren nach Ansprüchen 5 und 6, dadurch gekennzeichnet, dass der Emulgator B ganz oder teilweise neutralisierte Carboxylgruppen enthält, deren Anzahl einer Säurezahl von 15 bis 35 im nicht-neutralisierten Zustand entspricht.

8. Verfahren nach Ansprüchen 5–7, dadurch gekennzeichnet, dass der Emulgator B aus einem OH-reichen Polyester auf Basis Phthalsäure und/oder Tetrahydrophthalsäure und Trimethylolpropan durch Umsetzung mit einem Polyäthylenoxid-Isocyanat-Vorkondensat hergestellt wird, wobei der Gehalt an Polyäthylenoxidresten im Emulgator B zwischen 10 und 20 Gew.-% liegt und die Polyäthylenoxideinheiten mittlere Molekulargewichte zwischen 800 und 3000 aufweisen.

9. Verwendung der Dispersionen nach Ansprüchen 1–4 in Kombination mit wasserlöslichen Aminoplasten als Einbrennlacke.

**Claims**

1. Aqueous dispersions of

A) 25–60% by weight of at least one dispersed alkyd resin or oil-free polyester having an average molecular weight $\bar{M}_n$ of between 800 and 6000,

B) 3–15% weight of at least one emulsifier and

C) 25–62% by weight of aqueous phase,

based in each case on the sum of components (A), (B) and (C), characterised in that the dispersions are free of organic solvents, the average particle size of the resin phase is 50 to 3000 nm, the alkyd resin or oil-free polyester (A) has an acid number of from 3 to 25 and the acid component of the alkyd resin or oil-free polyester (A) consists of

a) 10–100 mol% of condensed residues of polybasic carboxylic acids having 4–30 C-atoms in which the carboxyl groups are attached to secondary and/or tertiary C-atoms which do not form part of an aromatic system and are not linked to other C-atoms through a multiple bond,

b) 0–90 mol% of condensed residues of other aliphatic and/or aromatic polybasic carboxylic acids having 4 to 12 C-atoms, and

c) 0–60% by weight of condensed residues of aliphatic, cycloaliphatic and/or aromatic monocarboxylic acids having 6–35 C-atoms, the molar percentages being based in each case on the sum of components (a) and (b) and the percentages by weight of (c) being based on alkyl resin or polyester (A), and the emulsifier B contains a polyester which is coupled directly through ester bonds or through an intermediate member to one or more polyalkylene oxide chains having 2 to 4 C-atoms in the alkylene oxide residue, this intermediate member being derived from a melamine resin or from a polyisocyanate unit or silicone.

2. Dispersions according to Claim 1, characterised in that the emulsifier B contains 5–70% by weight of polyalkylene oxide groups.

3. Dispersions according to Claims 1 and 2, characterised in that the emulsifier B contains partly or completely neutralised carboxyl groups, the number of which corresponds to an acid number in the unneutralised state of 15 to 35.

4. Dispersions according to Claims 1–3, characterised in that the emulsifier B is prepared from an OH-rich polyester based on phthalic acid and/or tetrahydrophthalic acid and trimethylol propane by reaction with a polyethylene oxide isocyanate precondensate, the content of polyethylene oxide residues in the emulsifier B being between 10 and 20% and the polyethylene oxide units having an average molecular weight between 800 and 3000.

5. Process for the preparation of aqueous dispersions of

A) 25–60% by weight of at least one dispersed alkyd resin or oil-free polyester having an average molecular weight $\bar{M}_n$ of between 800 and 6000,

B) 3–15% by weight of at least one emulsifier and

C) 25–62% by weight of aqeous phase,

based in each case on the sum of components (A), (B) and (C),

in which the alkyd resin or oil-free polyester (A) is homogenised in the solvent-free state with the emulsifier at temperatures of from 80–120°C and the water or aqeous phase

(C) is stirred into the solvent-free melt, or conversely the melt is stirred into the water or aqueous phase (C), charcterised in that the dispersions are free of organic solvents, the average particle size of the resin phase is 50 to 3000 nm, the alkyd resin or oil-free polyester (A) has an acid number of from 3 to 25 and the acid component of the alkyd resin or oil-free polyester (A) consists of

a) 10–100 mol% of condensed residues of polybasic carboxylic acids having 4–30 C-atoms in which the carboxyl groups are attached to secondary and/or tertiary C-atoms which do not form part of an aromatic system and are not linked to other C-atoms through a multiple bond,

b) 0–90 mol% of condensed residues of other aliphatic and/or aromatic polybasic carboxylic-acids having 4 to 12 C-atoms, and

c) 0–60% by weight of condensed residues of aliphatic, cycloaliphatic and/or aromatic monocarboxylic acids having 6–35 C-atoms, the molar percentages being based in each case on the sum of components (a) and (b) and the percentages by weight of (c) being based on alkyl resin or polyester (A), and the emulsifier B contains a polyester which is coupled directly through ester bonds or through an intermediate member to one or more polyalkylene oxide chains having 2 to 4 C-atoms in the alkylene oxide residue, this intermediate member being derived from a melamine resin or from a polyisocyanate unit or silicone.

6. Process according to Claim 5, characterised in that the emulsifier B contains 5–70% by weight of polyalkylene oxide groups.

7. Process according to Claims 5 and 6, characterised in that the emulsifier B contains partly or completely neutralised carboxyl groups, the number of which corresponds to an acid number in the unneutralised state of 15 to 35.

8. Process according to Claims 5–7, characterised in that the emulsifier B is prepared from an OH-rich polyester based on phthalic acid and/or tetrahydrophthalic acid and trimethylol propane by reaction with a polyethylene oxide isocyanate precondensate, the content of polyethylene oxide residues in the emulsifier B being between 10 and 20% and the polyethylene oxide units having an average molecular weight between 800 and 3000.

9. The use of the dispersions according to Claims 1–4 in combination with water-soluble aminoplasts as stoving lacquers.

**Revendications**

1. Dispersions aqueuses à

A) 25–60% en poids d'au moins une résine alkyde ou polyester exempt d'huile, dispersible, ayant un poids moléculaire moyen $\bar{M}_n$ entre 800 et 6000,

B) 3–15% en poids d'au moins un émulsifiant et

C) 25–62% en poids d'une phase aqueuse,

chaque fois par rapport à la somme des composants A, B et C,

caractérisées en ce que les dispersions sont exemptes de solvants organiques, en ce que le dimension moyenne de particule de la phase résineuse s'élève à 50 à 3000 nm, la résine alkyde ou le polyester exempt d'huile A possède un indice d'acide de 3–25 et le composant acide de la résine alkyde ou du polyester exempt d'huile A consiste en

a) 10–100 moles % de radicaux incorporés par condensation d'acides carboxyliques polybasiques ayant 4–30 atomes de carbone, dans lesquels les groupes carboxyle sont liés à des atomes de carbone secondaires et/ou tertiaires, qui ne font pas partie d'un système aromatique et qui sont reliés à d'autres atomes de carbone non pas par une liaison multiple,

b) 0–90 moles % de radicaux incorporés par condensation d'autres acides carboxyliques polybasiques aliphatiques et/ou aromatiques ayant 4–12 atomes de carbone et

c) 0–60% en poids de radicaux incorporés par condensation d'acides monocarboxyliques aliphatiques, cycloaliphatiques et/ou aromatiques ayant 6 à 35 atomes de carbone, les pourcentages molaires étant chaque fois rapportés à la somme des composants a et b et les pourcentages en poids de c) à la résine alkyde ou polyester A, et en ce que l'émulsifiant B contient un polyester qui est accouplé directement par des liaisons ester ou par un élément intermédiaire à une ou plusieurs chaînes oxyde de polyalcoylène ayant 2 à 4

atomes de carbone dans le radical oxyde d'alcoylène, cet élément intermédiaire provenant d'une résine de mélamine, d'un bloc polyisocyanate ou de silicone.

2. Dispersions selon la revendication 1, caractérisées en ce que l'émulsifiant B contient 5-70% en poids de radicaux oxyde de polyalcoylène.

3. Dispersions selon les revendications 1 et 2, caractérisées en ce que l'émulsifiant B contient des groupes carboxyle totalement ou partiellement neutralisés dont le nombre corresond à un indice d'acide de 15 à 35 à l'état non neutralisé.

4. Dispersions selon les revendications 1 à 3, caractérisées en ce que l'émulsifiant B est préparé à partir d'un polyester riche en OH à base d'acide phtalique et/ou d'acide tétrahydrophtalique et de trimétylolpropane, par réaction avec un précondensat oxyde de polyéthylène-isocyanate, la teneur en radicaux oxyde de polyéthylène dans l'émulsifiant B se situant entre 10 et 20% en poids et les unités oxyde de polyéthylène présentant un poids moléculaire moyen entre 800 et 3000.

5. Procédé de préparation de dispersions aqueuses à partir de

A) 25-60% en poids d'au moins une résine alkyde ou polyester exempt d'huile, dispersible, ayant un poids moléculaire moyen $\bar{M}_n$ entre 800 et 6000,

B) 3-15% en poids d'au moins un émulsifiant et

C) 25-62% en poids de phase aqueuse, chaque fois par rapport à la somme des composants A, B et C, suivant lequel on homogénéise la résine alkyde ou le polyester exempt d'huile A en masse fondue à des températures de 80-120°C avec l'émulsifiant et dans cette phase fondue on incorpore l'eau ou la phase aqueuse C, ou inversément la masse fondue dans l'eau ou dans la phase aqueuse C,

caractérisé en ce que les dispersions sont exemptes de solvants organiques, la dimension moyenne de particule de la phase résineuse s'élève à 50 jusqu'à 3000 nm, la résine alkyde ou le polyester exempt d'huile A possède un indice d'acide de 3-25 et le composant acide de la résine alkyde ou du polyester exempt d'huile A consiste en

a) 10-100 moles % de radicaux incorporés par condensation d'acides carboxyliques polybasiques ayant 4 à 30 atomes de carbone, dans lesquels les groupes carboxyle sont attachés à des atomes de carbone secondaires et/ou tertiaires qui ne font pas partie d'un système aromatique et qui sont liés à d'autres atomes de carbone non pas par l'intermédiaire d'une liaison multiple,

b) 0-90 moles % de radicaux incorporés par condensation d'autres acides carboxyliques polybasiques aliphatiques et/ou aromatiques ayant 4-12 atomes de carbone et

c) 0-60% en poids de radicaux incorporés par condensation d'acides monocarboxyliques aliphatiques, cycloaliphatiques et/ou aromatiques ayant 6-35 atomes de carbone, les pourcentages molaires se rapportant chaque fois à la somme des composants a et b et les pourcentages en poids de c) à la résine alkyde ou au polyester A, et en ce que l'émulsifiant B contient un polyester qui est accouplé directement par des liaisons ester ou par un élément intermédiaire à une ou plusieurs chaînes oxyde de polyalcoylène ayant 2-4 atomes de carbone dans le radical oxyde d'alcoylène, cet élément intermédiaire dérivant d'une résine de mélamine, d'un bloc polyisocyanate ou de silicone.

6. Procédé selon la revendiction 5, caractérisé en ce que l'émulsifiant B contient 5-70% en poids de radicaux oxyde de polyalcoylène.

7. Procédé selon les revendications 5 et 6, caractérisé en ce que l'émulsifiant B contient des groupes carboxyle totalement ou partiellement neutralisés dont le nombre correspond à un indice d'acide de 15 à 35 à l'état non neutralisé.

8. Procédé selon les revendications 5 à 7, caractérisé en ce que l'émulsifiant B est préparé à partir d'un polyester riche en OH à base d'acide phtalique et/ou d'acide tétrahydrophtalique et de triméthylolpropane par réaction avec un précondensat oxyde de polyéthylène-isocyanate, la teneur en radicaux oxyde de polyéthylène dans l'émulsifiant B se situant entre 10 et 20% en poids et les unités oxyde de polyéthylène présentant des poids moléculaires moyens entre 800 et 3000.

9. Utilisation des dispersions selon les revendications 1 à 4 en combinaison avec des aminoplastes solubles dans l'eau comme vernis à cuire.